(19) **Europäisches Patentamt European Patent Office Office européen des brevets**

(11) **EP 4 471 714 A1**

(12) **EUROPEAN PATENT APPLICATION**

(43) Date of publication:
**04.12.2024 Bulletin 2024/49**

(21) Application number: **23176139.6**

(22) Date of filing: **30.05.2023**

(51) International Patent Classification (IPC):
**G06T 7/11** *(2017.01)*

(52) Cooperative Patent Classification (CPC):
**G06T 7/11;** G06T 2207/20084; G06T 2207/20092;
G06T 2207/20104

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventors:
• **BROSCH, Tom**
  **Eindhoven (NL)**

• **CAROLUS, Heike**
  **Eindhoven (NL)**
• **EWALD, Arne**
  **5656AG Eindhoven (NL)**
• **FLÄSCHNER, Nick**
  **Eindhoven (NL)**
• **GESSERT, Nils Thorben**
  **Eindhoven (NL)**
• **SCHMIDT-RICHBERG, Alexander**
  **Eindhoven (NL)**

(74) Representative: **Philips Intellectual Property & Standards**
**High Tech Campus 52**
**5656 AG Eindhoven (NL)**

(54) **A COMPUTER-IMPLEMENTED METHOD AND IMAGE PROCESSING DEVICE FOR MARKING OBJECTS ON 3D IMAGES**

(57)     A computer-implemented method for marking an object (5) on a 3D image, comprising the following steps: providing a 3D image including an object (5); displaying at least one 2D slice (10) of the 3D image to a user and positioning a 3D geometric form within the 3D image; receiving position information of the 3D geometric form as selected by the user; automatically defining a 3D region of interest (7) within the 3D image which comprises the 3D geometric form and clipping the image data from the 3D region of interest (7) from the 3D image; applying a trained algorithm to the image data from the 3D region of interest (7), wherein the output of the trained algorithm is a 3D volume (9) within the 3D region of interest (7) which is predicted to cover the object (5).

FIG. 3

**Description**

FIELD OF THE INVENTION

The invention relates to a computer-implemented method for marking at least one object on a 3D image as well as a corresponding image processing device and method for training a neural network.

BACKGROUND OF THE INVENTION

The segmentation of structures, in particular the delineation of structures, in volumetric, i.e., three-dimensional (3D), images, is required for many medical applications, such as measurements or treatment planning. For example, markings and annotations can be generated by manually delineating the boundaries of an object. However, manually generating markings of objects in images can be a very time-consuming task. Additionally, it is required that the user draws very accurately in order to correctly delineate the object boundary. Hence, the quality of the markings is very much dependent on the skill and diligence of the user.

OBJECT OF THE INVENTION

It is, therefore, an object of the invention to provide a method to improve on the above-mentioned problems, in particular to allow a more time-efficient way of marking at least one object on a 3D image. Furthermore, it would be desirable to provide means to allow a more reliable way of marking objects that is less dependent on user skill and diligence.

SUMMARY OF THE INVENTION

To meet these objects, a method according to claim 1, an image processing device according to claim 12, and a method according to claim 13 are provided. Advantageous embodiments are set out in the dependent claims. Any features, advantages or alternative embodiments described herein in relation to the claimed method are also applicable to the other claim categories and vice versa.

According to a first aspect, a computer-implemented method for marking at least one object on a 3D (three-dimensional) image, in particular medical 3D image data, is provided. The method comprises the following steps:

(a) providing a 3D image including at least one object to be marked, wherein the 3D image may be represented by a plurality of 2D (two-dimensional) slices;
(b) displaying at least one 2D slice of the 3D image to a user and positioning a 3D geometric form within the 3D image, wherein a cross-section of the 3D geometric form is displayed on the 2D slice;
(c) providing means to the user to select a position of the 3D geometric form on the 2D slice so that the 3D geometric form at least partially overlaps with the object to be marked and receiving position information of the 3D geometric form as selected by the user;
(d) automatically defining a 3D region of interest within the 3D image which comprises the 3D geometric form at the selected position and clipping the image data from the 3D region of interest from the 3D image;
(e) applying a trained algorithm to the image data from the 3D region of interest, wherein the output of the trained algorithm is a 3D volume within the 3D region of interest which is predicted to cover the object;
(f) outputting the marked 3D volume, optionally together with the 2D slice.

The method may be carried out by an image processing device. The image processing device may be or may comprise, for example, a computer, such as a personal computer, a cloud computer, a tablet or a server. Additionally and/or alternatively, the image processing device may be part of an imaging system, in particular a medical imaging system. 3D images may comprise 3D image data. 3D images may be represented by volume rendering or by providing 2D slices cutting through the 3D volume. The method is particularly advantageous when applied to medical 3D image data because providing markings of objects within the 3D images is useful for many medical applications, including measurements and examinations or treatment planning as well as for training machine algorithms, e.g. to automatically recognize objects such as particular organs. However, the method may also be applied to other 3D images in order to mark objects within these images. The object may usually be a 3D object. In the case of medical 3D image data, the object may, for example, be an organ, such as a kidney, or part of an organ. Within the context of this inventions marking objects may mean that the image volume of the 3D image that represents the object or part of the object is marked. The object may be marked by providing image coordinates that lie within the object. The output of the trained algorithm may be a "mask" of the 3D region of interest, with all pixels/voxels predicted to lie outside the object having a value of 0, and all pixels/voxels predicted to lie within the object having a value ≠ 0, preferably the same value, for example 1. The voxels that are predicted to lie within the object may usually be contiguous, thus forming a single marked 3D volume, however this is not a condition that can be programmed into the trained algorithm, and it is therefore not an absolute requirement. The output of the trained algorithm may be comparable to a segmentation of the object, but it is not obtained by a classical segmentation algorithm, but by a trained algorithm. In an alternative embodiment, the output of the trained algorithm may be the voxels which form the boundary between object and the other structures in the 3D image. In the marked 3D volume that is outputted in step (f), optionally together with the 2D slice, pixels or voxels that belong to the object may be identified, e.g. by highlighting these pixels/voxels or otherwise labelling or tagging these pixels/voxels or their position within the 3D image.

The term marking of an object may sometimes also be referred to as annotating an object. The terms "pixel" and "voxel" are used interchangeably herein, and both designate a value of an image matrix.

In order to provide the 3D image to the user, a 2D slice of the 3D image is displayed to the user. The user may recognize the object to be marked within this slice and note where the boundaries of this object are within this slice. Accordingly, the user may have a relatively good idea what part of the 2D slice belongs to the object and what part of the 2D slice does not belong to the object. At this point it may be a possibility to manually mark the object within the 2D slice and then switch to other 2D slices, in order to mark the object in all of these individual slices. However, this is a very time-consuming task. Furthermore, the reliability of such marking will depend on the skill and diligence of the user and usually correlate with the time that is spent on the process. Advantageously, 3D geometric form is provided and a cross section of this 3D geometric form, namely in particular the cross section that lies in the plane of the 2D slice, is displayed to the user. The cross section may, e.g., be displayed by displaying the boundaries of the cross section on top of the 2D image slice. The boundaries may be displayed in a colour that has a strong contrast to the image data of the 2D slice so that the user can easily recognize the cross-section. For example, the image data on the 2D slice may be represented by grey values and the 2D slice may be represented in colour, e.g. in a bright colour such as bright green. Optionally, the area within the cross section may also be coloured, in particular with a transparent colour so that the image data is still visible.

The user may then position the 3D geometric form, in particular by shifting the displayed cross-section. For example, the user may select the position by using an input device, such as by moving a computer mouse and left clicking or by touching a touch screen. The 3D geometric form may be a 3D mouse cursor. Usually, the user will choose a position such that the cross section overlaps with the object to be marked in the currently displayed slice. The user may choose a position such that the boundary of the cross section is at the position of the boundary of the object to be marked such that the cross section lies completely within the object. However, the user may also overlap or "overdraw" the boundary at least slightly, so that the 3D geometric form extends somewhat outside of the object, i.e. beyond the boundary of the object. Since the method of the invention will nonetheless correctly identify and mark the object, the user can work much less diligently and thereby save a lot of time when marking objects. The input of the user may be processed by an image processing device.

Accordingly, due to the 3D shape of the 3D geometric form, not only the area on the 2D slice may be input and processed, but also the overall 3D region defined by the shape of the 3D geometric form. The 3D geometric form may thus be a tool that allows the user to simultaneously input positional information over a plurality of slices within one single action. This information may then advantageously be received, e.g., by the image processing device. Advantageously such a tool may reduce the effort of delineating objects by automatically drawing the 3D geometric form, e.g. around a clicked position. For example, the tool may be a ball tool corresponding to a 3D geometric form of a ball. Hence, instead of just generating a 2D circle marking, a 3D ball marking around the clicked position is created. Accordingly, multiple slices of the volumetric image may be edited at once and, thus, the required time to mark a complete 3D object may be reduced significantly. However, since, in general, the shape of the 3D geometric form will not be identical to the shape of the object, the shape of the 3D geometric form at the selected position will likely not correspond perfectly to the boundaries of the object in all of the 2D slices of the 3D image. Hence, unintended changes in neighbouring slices may also occur, since the form of the object to be marked is usually not perfectly ball-shaped itself or generally not shaped according to the 3D geometric form. In particular, the 3D geometric might lie outside the object in some slices or even in the current slice, if the user does not select accurately. Accordingly, if this information were just taken as input by the user, either additional editing for correcting this problem would be necessary, or the marking might possible be quite inaccurate. The problem may also be countered by reducing the radius of the ball-shape in order to reduce the inaccuracy, but this will come at the cost of more editing time. In practice, choosing the correct radius may therefore be a compromise between more 3D editing required and less correction of unintended changes.

Advantageously, it is provided that a trained algorithm is applied that may have the effect of automatically correcting user input that goes beyond the boundaries of the object. In particular, the trained algorithm may be trained to segment the object in the 3D region of interest. For this purpose, a 3D region of interest is automatically defined such that it comprises the 3D geometric form. Preferably the 3D region of interest is dimensioned and positioned such that the borders of the 3D region of interest have a predefined distance to the outer shape of the 3D geometric form that lies within the region. The 3D region of interest may preferably be defined such that its centre point corresponds to the centre point of the 3D geometric form. Corresponding centre points may provide particularly reliable results. The image data from the 3D region of interest is clipped from the 3D image and the trained algorithm is applied to this image data. This means in particular that the image data of the 3D region of interest is extracted and provided to the trained algorithm, while the image data that is outside the 3D region of interest is not provided to the trained algorithm. The trained algorithm may, for example, be a neural network. Alternatively, the trained algorithm may, for example, be an edge detection filter. Therein a region from a centre point of the region of interest to the edge of the boundary may be selected. The edge detection filter may be graph-cut based, in particular in order to separate image data of the 3D region of interest into inside and outside. The trained algorithm may have at least one input channel, where the image data from the 3D region of interest is input, and at least one output channel, where the output of the trained algorithm is provided. The image data from the 3D region of interest may be or comprise a 3D tensor containing the image information at the 3D region of interest. The trained algorithm is in particular trained or configured to automatically recognize the difference between the object and the surrounding region in 3D images and output corresponding information. Advantageously, the trained algorithm provides information about which part of the region of interest overlaps with the object to be marked and outputs a 3D volume or information corresponding to a 3D volume within the 3D region of interest with is predicted to cover the object.

According to an embodiment, the trained algorithm may be trained to output a 3D volume which lies completely within the 3D geometric form. In other words, the 3D volume may be chosen such that it lies within the 3D geometric form. The inventive method may thus provide a means of correcting overdrawing of a user over the boundaries of the object while at the same time staying close to the user input. Advantageously, the user may have thus more control over the outcome of the drawing. Additionally, a more intuitive approach may be provided. The 3D geometric form may thus indicate the maximal volume that will potentially be marked.

According to an embodiment the trained algorithm may be trained to output a 3D volume which lies within the 3D geometric form and which additionally also overlaps the 3D geometric form for a predefined amount as long as this amount lies within the object. In other words, the 3D volume may be chosen such that it does not go beyond the 3D geometric form by more than a predefined maximum amount. This may be advantageous in that a user having the habit of selecting a region that is not at the boundary of the object but slightly distanced from the boundary, e.g. by systematically misjudging the boundaries of the object, may be automatically corrected. Advantageously the outcome of the marking may thus be more objective and less dependent on the individual user. This embodiment may be further advantageous in that the complete object may potentially be marked quicker by the user, since less accuracy of the user may be needed. The marked 3D volume may be binary information differentiating between a volume within the object and a volume outside the object. For example, a binary annotation of the 3D volume may be output. The marked 3D volume may be output together with the 2D slice. The 3D volume may be transferred to the image domain and drawn as marking on the displayed 2D slice. For example, the 2D slice may be displayed to the user together with a marking showing the part of the 2D slice that lies within the marked 3D volume.

The 3D geometric form may have a rounded outer shape. According to an embodiment, the first 3D geometric form is an ellipsoid, preferably a sphere. Hence, the 3D geometric form may be ball-shaped. For example, the 3D geometric form may be a ball-shaped mouse cursor. Correspondingly the cross-section displayed in the 2D slice may have the contour of an ellipse, in particular of a circle. Advantageously, a sphere may be particularly well adapted in adapting to the contours of an object. The size of the 3D geometric form may be adjustable and may be selected before starting the method for marking, in particular by a user. In useful embodiments, the size of the 3D geometric form is smaller, in particular having a volume of less than 1/5, preferably less than 1/10 of the object to be marked. Thereby, steps (c) to (e) or (f) may be repeated several times in order to mark the complete object. This may advantageously create the user experience of "colouring" the object, wherein the result is much less accurate than the actual drawing work of the user.

According to an embodiment, in addition to the image data, information corresponding to the 3D geometric form is input into the trained algorithm, wherein information corresponding to the 3D geometric form comprises in particular information about the size of the 3D geometric form and optionally its relative position within the region of interest. For example, the information corresponding to the 3D geometric form may be a click map, corresponding to a mouse click of the user, that indicates the location and size of the 3D geometric form in relation to the 3D region of interest.

According to an embodiment, the 3D region of interest is of cuboid, in particular of rectangular cuboid, for example of cubic, form. Correspondingly, within the 2D slice an area of rectangular form around the cross section may be within the 3D region of interest. A rectangular cuboid has been turned out to be particularly advantageous to use when a trained neural network is applied as the trained algorithm, since the rectangular form may work well with typical architectures of neural networks. The 3D region of interest may be represented by a 3D image matrix or 3D tensor.

According to an embodiment, the 3D region of interest is defined to be larger than the 3D geometric form by a predefined amount. This feature may allow to train the neural network more specifically to recognize an object. In particular the speed and reliability may be optimized such that the size of the 3D region is chosen to be large enough to provide reliable results but on the other hand as small as possible to allow optimizing the calculation speed and thus the time the algorithm needs for providing an output. The actual size to apply may depend on the particular algorithm that is used and its architecture. The 3D region of interest may be 2 to 4 times larger, preferably 2,5 to 3 times larger, than the 3D geometric form. When the 3D region of interest is cuboid in shape, a side length of the 3D region of interest may be greater by the predefined amount than a diameter of the 3D geometric form. It has been found that 2 to 4 times larger is particularly suitable to enable a sufficiently reliable determination of the 3D volume. More preferably, 2,5 to 3 times larger may be particularly suitable in combining a good robustness of the method with a relatively fast calculation time, in particular potentially allowing quasi-real-time processing of the marking when combined with a neural network as explained herein.

According to an embodiment, for determining the 3D volume within the 3D region of interest, a 3D Gaussian kernel with its maximum at the centre point of the cross-section is fed into the trained algorithm, in particular into a neural network, together with the image data from the 3D region of interest, and wherein the trained algorithm determines the 3D volume based also on the 3D Gaussian kernel. The image data from the 3D region of interest may be a 3D tensor containing the image information at the 3D region of interest that is accompanied by a second 3D tensor of the same size that contains the 3D Gaussian kernel. The 3D Gaussian kernel may be passed as a second channel through the trained algorithm, in particular the trained neural network. The 3D tensor containing the image information at the 3D region of interest and the second 3D tensor containing the 3D Gaussian kernel may together be a 4D tensor, in particular a 4D tensor of the dimension $2 \times Z \times Y \times X$, wherein X, Y, Z are the 3D image coordinates. Advantageously, the trained algorithm may thus correlate each intensity value with the relative distance to the centre point of the cross-section and/or the of the 3D region of interest. The trained algorithm may thus, for example, emphasize the intensity values closer to the centre more for being more reliable, i.e., decreasing weight away from the centre. The 3D Gaussian kernel may be of the general (three-dimensional) Gaussian form

$$G(u, v) = \frac{1}{2\pi\sigma^2} e^{-\frac{u^2+v^2}{2\sigma^2}}$$

According to an embodiment, the user is provided with the means to change the size of the 3D geometric form. For example, the user may be provided with the functionality to change the size by scrolling a computer mouse wheel. The trained algorithm may comprise an input channel that indicates at least the size of the 3D geometric form. The size of the 3D geometric form may be indicated in relation to the size of the 3D region of interest. An interface may be provided that corresponds to existing marking or annotation interfaces, in particular to classical ball tool interfaces. Advantageously, the user may thus choose a most convenient and appropriate size of the 3D geometric form. For example, a smaller size of the 3D geometric form may be beneficial for smaller objects or for objects with a more irregular outer shape, while a larger size may be beneficial for larger and more regularly shaped objects.

According to an embodiment, for each size of the 3D geometric form a different trained algorithm, in particular a different trained neural network, trained for this specific size, is applied. Specifically training the algorithm for a specific size of the 3D geometric form may be particularly advantageous, as it has been found that the algorithm can thus be more reliable. For example, a neural network for output sizes of $8 \times 8 \times 8$, $12 \times 12 \times 12$, or $16 \times 16 \times 16$ may be trained, wherein the output size corresponds to the size of the marked 3D volume. The trained algorithm may comprise an additional input channel indicating the size and, optionally the location, of the 3D geometric form in relation to the region of interest. For example, when using a neural network, the additional input channel may be concatenated with an image-based input. The size of the region of interest with relation to the size of the output may be determined based applied trained algorithm, in particular based on the network architecture of a trained neural network. For example, in the case of a convolutional neural network, using real convolutions instead of padded convolutions may typically imply larger input than output sizes. Hence, as an example, for an input size of $18 \times 18 \times 18$, the output size may be $6 \times 6 \times 6$. For another example, for an input size of $40 \times 40 \times 40$, the output size may be $28 \times 28 \times 28$. However, these relative sizes may vary, in particular due to the applied architecture of the network.

According to an embodiment, the trained algorithm is a trained neural network. The trained neural network may preferably be a trained convolutional neural network. The trained neural network may in particular be a semantic network, preferably a U-Net based network or an F-Net based network. The trained neural network may preferably be trained to predict an intended segmentation output based on the user selection. Preferably, the neural network has a shallow network architecture and is configured to provide output in real time. For example, a shallow network architecture may be a neural network with a U-Net structure that has 2 levels and 3 convolutional blocks per level or anything in this order of magnitude. Providing output in real time may in particular mean that the output is created within less than 3 seconds, preferably within less than 1 second. Surprisingly, it has been found that a neural network can deliver reliable results in a very short amount of time, which may even allow to update the marking nearly immediately after the user selection, thus enabling a user experience that is barely delayed when compared to the user marking the object entirely manually without the support of the neural network. Furthermore, a neural network has been found to be more reliable than other algorithms such as an edge detection filter. For example, an edge detection filter may have problems finding edges on heavily textured or noisy images, while the trained neural network turned out to be quite reliable and capable of delivering smooth edges corresponding closer to the real edge of the object. A semantic network may be a network that is trained to output information for every pixel or voxel regarding whether that pixel/voxel is part of the object or not. According to a preferred embodiment, the U-trained convolutional neural network may comprise 1 to 3, preferably 2, levels and 2 to 4, preferably 3, convolutional blocks per level. Such an architecture has been found to be surprisingly fast and at the same time reliable. In a particularly preferred embodiment, the trained neural network is a U-Net based neural network. The general concept of a U-Net convolutional network is described in Ronneberger et al., "U-Net: Convolutional Networks for Biomedical Image Segmentation. MICCAI' 15, LNCS, Vol. 9351, 234-241, 2015. According to a preferred embodiment, the U-Net may comprise 1 to 3, preferably 2, levels and 2 to 4, preferably 3, convolutional blocks per level. In an alternative preferred embodiment, the trained neural network is an F-Net based neural network. An F-Net based neural network can be particularly adaptable to be used with different organs, i.e. with different kinds of objects. Furthermore, an F-Net is optimized to reduce the amount of GPU memory that is required for processing large images. I.e., advantageously, the F-Net may be particularly advantageous to process large 3D images. The concept of the F-Net is described in Brosch and Saalbach, "Foveal fully convolutional nets for multi-organ segmentation. Proc. SPIE, 105740U, 2018. A convolutional network usually reduces the number of rows compared to the input. This can be accounted for by filling the rows of the data, e.g. with zeroes, before inputting the image data into the convolutional neural network. This may be referred to as padding. Padding may be advantageous to ensure that the size of the output is not too small compared to the input. According to an alternative embodiment, the trained neural network may comprise real convolutional layers and no padded convolutional layers. It has been found, that avoiding padding may be beneficial to avoid problems related to the padding. Furthermore, the preceptive field in relation to the output region may be increased, when real convolutional layers are used instead of padded convolutional layers.

According to an embodiment, the steps (c) to (e), namely in particular the steps of providing means to the user to select a position of the 3D geometric form on the 2D slice, automatically defining a 3D region of interest, and applying a trained algorithm to the image data from the 3D region of interest, are repeated at least once such that at each repetition an additional 3D volume is generated that depends on additional user input, and wherein each additional 3D volume is joined together with the currently existing 3D volume resulting in a larger existing 3D volume, wherein, optionally, the currently existing 3D volume is displayed for the user and updated after each repetition. Advantageously, it has been found that the determination of the 3D volume can be so fast that updating the display can be basically in real-time, in particular when using a trained neural network. Accordingly, the user selection can be processed quickly and the 3D region of interest can be input into the trained algorithm repeatedly according to the current user selection. The currently displayed marking may thus be updated according to additional user selection by adding additional markings corresponding to the additional user selection. The user may thus "draw" the markings via moving the 3D geometric form, wherein the markings are automatically corrected to be within the object to be marked, in particular also for the 2D slices that are currently not displayed to the user. Hence, the process of marking an object may thus be accelerated significantly. Furthermore, the reliability may also be increased and be less dependent on the individual user.

According to an embodiment, the user is provided with the opportunity to switch the displayed view to another 2D slice of the 3D image and to select a position in the currently displayed 2D slice, and wherein the method steps following the user selection are carried out based on the user selection on the slice that is currently displayed. Advantageously, the user may thus switch between different slices, for example, to add markings on slices where the object is wider than on other slices and to generally control the marking of the object across the whole 3D image.

According to an embodiment, the user is enabled to choose an intensity window of the displayed 2D slice. Hence, the user may change the intensity window such that the object is optimally contrasted with respect to the background. This may advantageously improve the performance of the trained algorithm. For example, in order to mark the liver in a CT (computed tomography) scan (liver ~50-100 HU, surrounding tissue ~-100 HU; "HU" being the Hounsfield scale), the user may choose a window/level setting of 300/0 HU.

According to another aspect, an image processing device is provided. The image processing device is configured to carry out the following steps:

(a) receiving a 3D image including at least one object to be marked, wherein the 3D image may be represented by a plurality of 2D slices;
(b) displaying at least one slice of the 3D image to a user;
(c) providing means to the user to a select position of the 3D geometric form on the 2D slice so that the 3D geometric form at least partially overlaps with the object to be marked;
(d) in response to the user selection automatically defining a 3D region of interest within the 3D image which comprises the 3D geometric form at the selected position and clipping the image data from the 3D region of interest from the 3D image;
(e) applying a trained algorithm to the image data from the 3D region of interest, wherein the output of the trained algorithm is a 3D volume within the 3D region of interest which is predicted to cover the object;

(f) outputting the 2D slice together with the marked 3D volume.

In particular the image processing device may be configured to carry out the method steps as described herein with respect to the computer-implemented method for marking at least one object on a 3D image. The image processing device may comprise a computer-readable storage medium, on which in particular instructions to carry out the method as described herein may be stored. The image processing device may be or may comprise, for example, a computer, such as a personal computer, a cloud computer, a tablet, or a server. Additionally and/or alternatively, the image processing device may be part of an imaging system, in particular a medical imaging system. The image processing device may comprise a user interface that allows to display information to a user, such as the 3D image and the cross section of the 3D geometric form. For this purpose, the image processing device may comprise or may be connected to a displaying device, such as a computer screen. Furthermore, the interface may comprise means to receive user input, such as the selection of the 3D geometric form on the 2D slice. For this purpose, the image processing device may comprise an input device, such as a computer mouse and/or keyboard or a touchpad. The user interface may be similar to a conventional user interface for marking at least one object on a 3D image. For example, the user interface may be configured to allow a user to select the size of the 3D geometric form via a scroll wheel of a mouse. For example, the user interface may be configured to allow the user to select a position of the 3D geometric form by moving a computer mouse and clicking a key, such as the left mouse button.

According to another aspect, a method for training a neural network, in particular to train a neural network that corresponds to the trained neural network as described herein, is provided. The method comprises the following steps:

(a) providing as input training data a set of 3D regions of interest from a 3D image,
wherein each 3D region of interest includes at least part of an object on the 3D image;
(b) providing as output training data a 3D data set having the size of the 3D region of interest and containing information for each voxel whether it is marked as part of the object or not corresponding to the object for each provided 3D region of interest;
(c) training the neural network with the input training data and the output training data.

Accordingly, the neural network may be trained to predict a segmentation output as intended by a user on the basis of a user selection. The user selection is here simulated by providing the 3D regions of interest that correspond to the 3D regions of interest that are automatically created based on the user selection of the position of the 3D geometric form in the computer-implemented method for marking an object as described herein. The "intended" segmentation is simulated by the output training data, in that voxels are marked to be part of the object or not. Preferably, the input training data comprises a diverse set of images, with different kinds of objects to be marked, e.g. with different organs. Advantageously a diverse set of images may allow to generate a more flexible trained neural network that can recognize different kinds of objects, i.e. is more independent of a specific structure that is to be marked. Hence, a better generalizability may be advantageously achieved. The images used as training data may be selected randomly out of several 3D images. Furthermore, the objects to be marked within these 3D images may be selected randomly. The selected structures may be of similar contrast, e.g. all of dark contrast. This may allow to create a more specialized trained neural network, which may be more robust in the field of its specialization or which may require less training data. On the other hand, the selected structures may cover different kinds of contrast, e.g., objects that appear bright and objects that appear dark. This may generate a neural network that can be applied more generally for a wider range of objects. The region of interest may be chosen systematically, in particular in order to simulate a usual behaviour of a user. On the other hand, it may be an option to choose the regions of interest randomly. This may, for example allow a faster preparation of training data. Furthermore, a random selection may allow to train the neural network to be more robust with respect to unpredicted user behaviour. For example, the neural network may be trained to also work, when the region of interest is completely within the object, such that boundaries cannot be seen on the region of interest. The regions of interest that are chosen do thus not have to be completely plausible with respect to the anatomy of an object plausible or completely match the appearance of a given imaging modality, since smaller deviations might increase robustness of the trained neural network.

According to an embodiment, each provided 3D region of interest is chosen such that the distance between its centre point and a boundary of the object has a specified value, wherein the specified value is a fixed value or a fixed value with an added random deviation within a predefined maximum amount of deviation. The centre point may be in particular determined within a plane of the 3D image, i.e. within a 2D slice of the 3D image. Hence, the centre point may optionally be only the centre point of one cross section of the 3D region of interest. Advantageously, the specified value may correspond to a size of the 3D geometric form or the cross-section of the 3D geometric form, e.g., correspond to a radius of a sphere or a circle. Hence via this embodiment a user may be simulate to select the position of the 3D geometric form, in particular such that the boundary of the cross-section is placed in accordance with the boundary of the object. The specified value may thus be a fixed value corresponding to a size, in particular radius, of the cross-section. It may be particularly advantageous to add a random deviation to the fixed value. This may simulate different user behaviour, e.g. different habits in selecting the position of the 3D geometric form and/or differing applied precision during selection by different users. Advantageously, the trained neural network may thus become more robust to user-dependent deviations. The random deviation may also be regarded as noise of the position of the centre point of the 3D region of interest. In one embodiment, the random deviation may be limited such, that the distance between the boundary of the object and the centre point is only randomly decreased with respect to the fixed value. This may advantageously simulate selecting a position that slightly overlaps with the boundary, i.e. the user "drawing" over the boundary. This may be particularly advantageous, since the automatic correction of the inventive method may automatically correct such "overdrawing" via the application of the trained neural network and overdrawing may thus be advantageous in order to ensure that no fringe parts of the object at the boundary are missed. Hence, it may be particularly advantageous to specifically train the network for this kind of user behaviour.

According to an embodiment, the maximum amount of deviation is predefined relative to the size of a 3D geometric form to be used after training such that a larger size corresponds to a larger maximum amount of deviation. Advantageously, the predefined maximum amount of deviation may be chosen relative to size of the 3D region of interest, and thus in particular relative to the amount of the fixed value. This relation to the size of the 3D region of interest may in particular correspond to the size of the 3D geometric form. Accordingly, a larger size of the 3D region of interest may correspond to a larger size of the predefined maximum amount of deviation. This may advantageously take into account user behaviour of typically drawing or selecting more precisely when a smaller 3D geometric form is used. Thus, the neural network may be trained to be particularly prepared for this user behaviour and thus be more robust when the inventive method of marking an object is applied.

According to an embodiment, a plurality of neural networks is trained, each neural network being trained for a different specified size of a 3D geometric form and a specific output size. Hence, advantageously the neural networks may each be specialized for a certain specified size of the 3D geometric form. This may allow to apply the method of marking an object such that a user may select different sizes of the 3D geometric form, in particular corresponding to the trained different specified sizes. Therein, specialized neural networks may be applied that are specifically trained for the corresponding sizes. For example, the neural networks may be trained for output sizes of 6×6×6, 8×8×8, 12×12×12, 16×16×16, and/or 28×28×28, wherein the output size may in particular correspond to the size of the output of the neural networks, i.e., the marked 3D volume. For example, it has been successfully tested to train the neural network, for an input size of 18×18×18 in combination with an output size of 6×6×6. As another example, an input size of 40×40×40, has been trained together with an output size of 28×28×28. However, these relative sizes may vary, in particular due to the applied architecture of the neural network.

According to an embodiment, an intensity window of the 3D region of interest is randomly determined based on a at least one PERT distribution, wherein the at least one PERT distribution is in particular based on the min/max (i.e., minimum/maximum) data values of the corresponding 3D image, the mean data values inside and outside the object and the centre between the mean data values. The at least one PERT distribution may comprise two partial PERT distributions, a first partial PERT distribution and a second partial PERT distribution, both partial PERT distributions sharing a common centre value, wherein the centre value is in particular the maximum value of the first partial PERT distribution and the minimum value of the second partial PERT distribution. The first partial PERT distribution may be defined by the min data value of the corresponding 3D image, the mean data values inside the object and the centre between the mean data values. Therein the mean data value inside the object may be the most likely value of the first partial PERT distribution, the min data value of the corresponding 3D image may be the minimum of the firts partial PERT distribution, and the centre between the mean data values may be the maximum value of the first partial PERT distribution. The second partial PERT distribution may be defined by the max data value of the corresponding 3D image, the mean data values outside the object and the centre between the mean data values. Therein the mean data value outside the object may be the most likely value of the second partial PERT distribution, the max data value of the corresponding 3D image may be the maximum of the second partial PERT distribution, and the centre between the mean data values may be the minimum value of the second partial PERT distribution. 3D images usually are based on a range of data values, e.g. grey values ranging from dark to bright. The range of measured data values may depend on the image modality and the applied precision. For example, the data values may range from 0 to 255, e.g., 0 being bright and 255 being dark. Hence, the min value may be the lowest data value and the max value may be the highest data value of the range of data values. Furthermore, in order to allow a distinction between an object the surrounding region (background), the image modality for creating the 3D image is applied such that a clear contrast between the object and the surrounding region is created, such as the object having only or at least mostly high data values and the region around the object has only or at least mostly low data values, or vice versa. For example, considering a range of grey values, the object may appear bright and the surrounding area may appear dark in the 3D image. However, in order to optimize the contrast of between the object and the background it may be advantageous to adjust the window setting and the levelling, i.e. the intensity window. Via the window setting and the levelling, the range of data values that is resolved with grey values is determined, wherein all the data values outside this range is cut off, either being completely dark or completely bright. By cutting of some data values, the contrast between the object and the background may be clearer. Hence, it can be expected that a user will set the window setting and levelling accordingly. However, the exact setting may vary based on user preference. Advantageously, the application of the Pert distribution for preparing the training data with a random distribution of intensity windows may be an effective way of simulating this user-dependent variety of intensity windows. The mean data values inside the object and the mean data values outside the object correspond preferably to the most likely values of the pert distribution. Hence, this simulates that a user will typically set the intensity windows such that the average data value of the object contrast maximally with the average data value of the background, but also considers deviations from this approach. Accordingly, an intensity window will be chosen between a lower end and an upper end, where the ends are randomized according to the pert distribution, in particular the two partial PERT distributions. Preferably, a lower window bound of the window setting may be drawn from the first partial PERT distribution and an upper window bound of the window setting may be drawn from the second partial PERT distribution.

According to another aspect, a computer program is provided that comprises instructions which, when the program is executed by a computer, cause the computer to carry out the method for marking at least one object on a 3D image as described herein. The computer program may have the features and advantages of the method as described herein.

The features and advantages of different embodiments can be combined. The features and advantages of one aspect of the invention, e.g., the method, may be applied to the other aspects, e.g., computer program and the data processing system, and vice versa.

BRIEF DESCRIPTION OF THE DRAWINGS

The invention shall now be illustrated by means of embodiments with reference to the attached drawings, in which:

Fig. 1 shows a flow diagram describing a computer-implemented method for marking an object on a 3D image according to the invention;
Fig. 2 shows an example of two 2D slices of a 3D image with a cross-section of a 3D geometric object;
Fig. 3 shows a schematic representation of a method for marking at least one object according to the invention;
Fig. 4 shows a method for training a neural network according to the invention;

Fig. 5 shows a PERT distribution which may be used to generate training data for a neural network according to the invention.

DETAILED DESCRIPTION OF EMBODIMENTS

Throughout the figures, the same or corresponding features/elements of the various embodiments are designated with the same reference numbers.

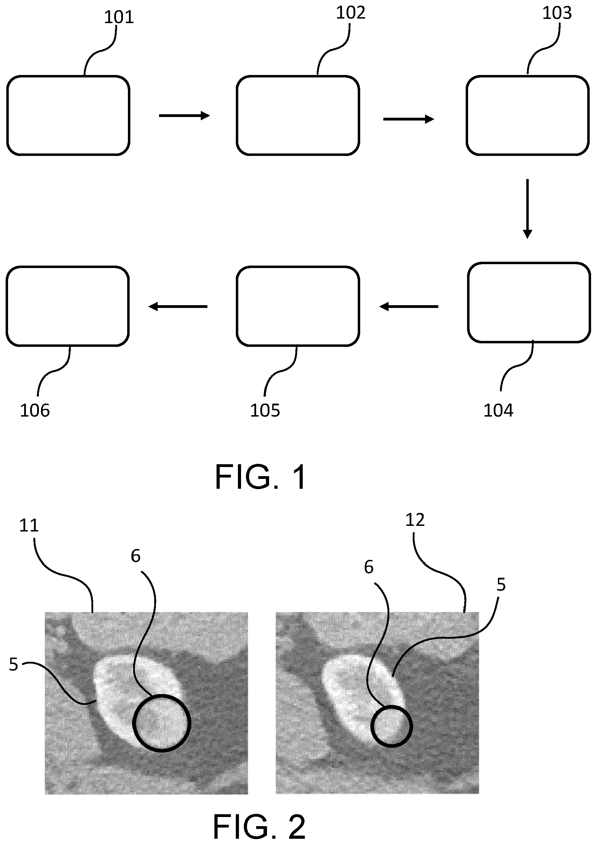

Fig. 1 shows a flow diagram describing a computer-implemented method for marking an object 5 on a 3D image according to the invention. In a first step 101, a 3D image is provided. The 3D image may preferably be a 3D medical image, such as a computed tomography image of an organ. Notably, the 3D image comprises the object 5 to be marked. The 3D image may, for example, be taken from a data base of 3D images. Alternatively, the 3D image may be measured with an image modality in this first step 101. Hence, the object 5 may be marked (in the following steps) directly after taking the 3D image measurement. In a further step 102, a 2D slice 10 of the 3D image is displayed, e.g. via a computer screen, to a user together with a cross-section 6 of a 3D geometric form that is positioned within the 3D image. The 3D geometric form may preferably be a sphere (i.e., a ball) and, correspondingly, the cross-section 6 may be a circle. In a further step 103, means are provided to the user to select a position of the 3D geometric form on the 2D slice 10 so that the 3D geometric form at least partially overlaps with the object 5. Hence, the user may try to mark the position of the object via this selection, in particular by moving the displayed cross-section 6 to overlap with the object 5, e.g. by moving the cross-section 6 with respect to the 2D slice 10 via a computer mouse. The user may than input a command, that the current position is to be the selected position, e.g. by left-clicking the computer mouse. When the user has selected the position, e.g., by moving the cross-section 6 with respect to the 2D slice 10 via a computer mouse and left-clicking when the desired position is reached, the positional information is received by the image processing device, such as by a computer. Optionally, in this step 103, particularly before the position selection, the user may be provided with the means to change the size of the 3D geometric form, for example by scrolling with a computer mouse wheel. Furthermore, the user may be provided with the opportunity to switch the displayed view to another 2D slice 10 of the 3D image and to select a position in the then other displayed 2D slice 10. In a further step 104, a 3D region of interest 7 is automatically defined, such that the 3D region of interest 7 comprises the 3D geometric form at its current position, and the image data from the 3D region of interest is clipped, i.e. taken for further processing. The 3D region of interest may preferably be of cuboid, in particular cubic, form. In a further step 105, a trained algorithm is applied to this clipped image data. The trained algorithm may in particular be a trained neural network 4, preferably a U-Net based network or an F-Net based network. If the user has the option to adapt the size of the 3D geometric form, one of a plurality of trained algorithms may be applied. The plurality of trained different algorithms may comprise different trained algorithms, each one being trained for another selectable size of the 3D geometric form. The algorithm is trained such that its output is a 3D volume 9 within the 3D region of interest 7 which is predicted to cover the object 5. According to an embodiment, the 3D volume may be chosen such that it lies within the 3D geometric form. Alternatively, the 3D volume may be chosen such that it does not go beyond the 3D geometric form by more than a predefined maximum amount. I.e., there may be a certain overlap that may ensure that a user systematically selecting a position that is a little of the boundary of the object 5 is automatically corrected. For determining the 3D volume 9 within the 3D region of interest 7, a 3D Gaussian kernel with its maximum at the centre point of the cross-section 6 may be fed into the trained algorithm together with the image data from the 3D region of interest7. In this case, the trained algorithm may determine the 3D volume also based on the 3D Gaussian kernel. In a further step 106, the marked 3D volume 9 is output. For example, the 3D volume may be displayed together with the 3D image or the 2D slice 10 of the 3D image. In particular, the displayed 2D slice 10 may be upgraded such that the object 5 or part of the object corresponding to the 3D volume 9 is now marked. For example, the 3D volume 9 may be marked on the 2D slice 10 via a circumference that is displayed to the user via the screen. The steps 103 to 105, and optionally 106, may be repeated at least once such that at each repetition an additional 3D volume 9 is generated that depends on additional user input during step 103, and wherein each additional 3D volume 9 is joined together with the currently existing 3D volume 9 resulting in a larger existing 3D volume 9. Optionally, the currently existing 3D volume 9 may be displayed for the user and updated after each repetition, in particular during step 106, which in this case may also repeated a corresponding number of times. For example, the user may switch to a different 2D slice of the 3D image for each repetition.

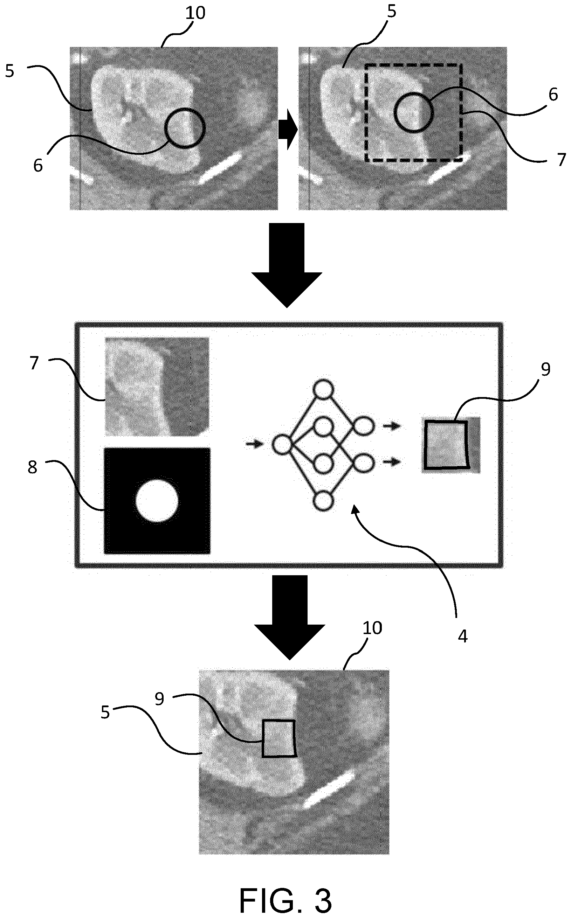

Fig. 2 shows an example of two 2D slices, a first 2D slice 11 on the left and a second 2D slice 12 on the right, of a 3D image. The 3D image comprises an object 5. Furthermore, in both 2D slices 11, 12, a corresponding cross-section 6, in the shape of a circle, of a 3D geometric form, here a sphere or ball, is displayed. The left 2D slice 11 is the one currently displayed to a user when the user is selecting the position of the 3D geometric form. As can be seen, the user has positioned the 3D geometric form such that the cross-section 6 is placed directly at the boundary at the lower right side of the object 5. However, due to the rigid shape of the 3D geometric form, the boundary of the 3D geometric form does not match the boundary of the object 5 in the second 2D slice 12 on the right. Instead, the cross-section 6 of the 3D geometric form goes beyond the object 6 on the second 2D slice 12, such that also part of the surrounding background is covered by the cross-section 6. If a marking were to be applied directly corresponding to the selected position of the 3D geometric form, the result would thus be rather unprecise. Accordingly, manual corrections would be necessary that require additional time of the user. This problem is tackled by the inventive method as detailed in the following Fig. 3.

Fig. 3 shows a schematic representation of a method for marking at least one object 5 according to the invention. A 2D slice 10 of a 3D image, comprising an object 5, in this example a human kidney, is displayed to a user together with a cross-section 6 of a 3D geometric form. The user may then move the cross-section 6 so that the cross-section 6 overlaps at least partially with the object and forward a command of his selection at the current position, e.g. by clicking a computer mouse. After receiving the user selection, a 3D region of interest 7, here shown by dotted lines, is automatically generated. The 3D region of interest 7 is defined so that its centre point corresponds to the centre point of the 3D geometric form. In this example it can be seen that the centre point of the cross-section 6 corresponds to the centre point of the rectangular cross section of the 3D region of interest 7. The 3D region of interest is larger than the 3D geometric form, preferably by a predefined amount. In this example the side length of the 3D region of interest 7 is about 2,6 times greater than the diameter of the cross-section 6 of the 3D geometric form. The image data of the 3D region of interest 7 is then cut out and fed to a trained algorithm, in this case a relatively simple trained neural network 4 with a shallow network architecture. Together with the image data of the 3D region of interest, information corresponding to the 3D geometric form 8, in this example a click-map that indicates the location and size of the 3D geometric object in relation to the 3D region of interest 7, is fed into the trained neural network 4. The trained neural network 4 may preferably comprise only real convolutional layers and no padded convolutional layers. The neural network 4 is trained to segment the object inside the ROI and output the predicted region as a 3D volume 9. The predicted 3D volume 9 is than transferred back to the image domain and displayed on the 2D slice 10 as a cross section of the marked 3D volume 9. I can be seen that while the shape of the 3D geometric form as selected by user did go beyond the boundaries of the object 5, the 3D volume 9 is automatically corrected by the trained neural network 4 and cut off at the boundary of the object 5, i.e., only image data that belongs to the object is within the 3D volume 9. Thus, in this embodiment, the cross-section 6 indicates the maximal region that is to be marked via the 3D volume 9 but that region is restricted to be within the object. It has been found that, surprisingly, this process of automatically corrected marking can be carried out with good robustness in quasi-real time, i.e., user input can be updated with markings nearly instantaneously, effectively allowing a user to "draw" the auto-corrected markings, e.g. by repeatedly clicking the mouse or even holding the mouse button and moving the mouse.

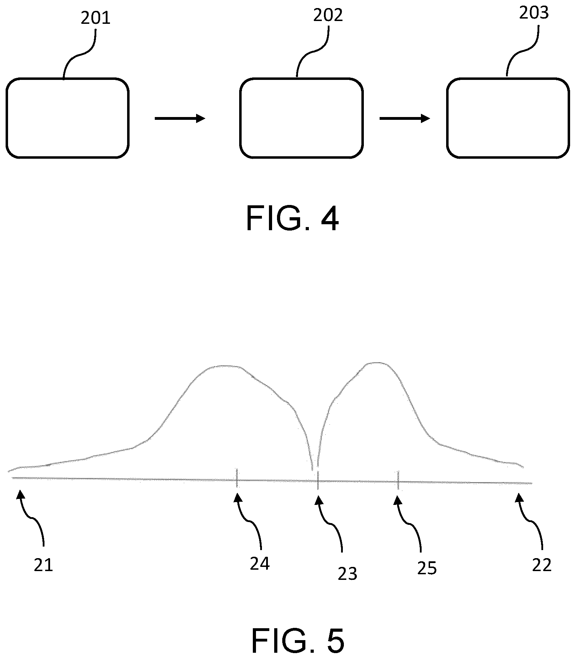

Fig. 4 shows a method for training a neural network according to the invention, in order to provide a trained neural network 4 as used in the method for marking at least one object 5. The method for training comprises a first step 201 of providing a set of 3D regions of interest 7 from a 3D image as input training data. Each 3D region of interest 7 includes at least part of an object 5 on the 3D image. Preferably, each provided 3D region of interest 7 is chosen such that the distance between its centre point and a boundary of the object 5 has a specified value. The specified value may be a fixed value or may be a fixed value with an added random deviation within a predefined maximum amount of deviation. In other words, a specified amount of noise may be added to the position of the 3D region of interest 7. Preferably, the maximum amount of deviation is predefined relative to the size of a 3D geometric form to be used after training during the method for marking at least on object. In order to simulate user behaviour of being more accurate when using a larger 3D geometric form, a larger size of the intended 3D geometric form may correspond to a larger maximum amount of deviation. In a further step 202, a 3D data set having the size of the 3D region of interest 7 and containing information for each voxel whether it is marked as part of the object or not corresponding to the object for each provided 3D region of interest I is provided as output training data. A plurality of corresponding input and output training data sets may be provided for different sizes of the intended 3D geometric form, corresponding to different specified values of the distance between its centre point and a boundary of the object 5. The plurality of training data sets may be used to train a plurality of neural networks, such that each neural network is trained for a different specified size of a 3D geometric form and a specific output size. In a further step 203, the neural network is trained with the input training data and the output training data. Optionally, a plurality of neural networks may be trained such that each neural network is trained for a different specified size of a 3D geometric form and a specific output size.

Fig. 5 shows a PERT distribution which may be used to generate training data for a neural network according to the invention. In particular the PERT distribution may be used to determine the intensity/window settings for an extracted 3D region of interest 7 that is used as input training data to simulate the behaviour of user when setting the window/levelling. In particular, the lower/upper intensity values of the window may be drawn from the PERT distribution. The PERT distribution is defined by the minimum value 21, the maximum value 22, the mean value inside the object 24, the mean value outside the object 25, and a centre value 23 between the mean values 24, 25. The mean values 24, 25 correspond to the most likely values of the PERT distribution. In particular, the PERT distribution may be seen as two partial PERT distributions, i.e. a partial PERT distribution on the left and a partial PERT distribution on the right, both partial PERT distributions sharing a common centre value 23, wherein the centre value 23 is in particular the maximum value of the left partial PERT distribution and the minimum value of the right partial PERT distribution. For example, the lower window bound may be drawn from a PERT distribution given by the minimal intensity value 21 in the image (minimum), the mean inside value 24 of the structure to be segmented (i.e., the most likely), and the centre value 23 between mean inside 24 and outside 25 intensity values (thus being the maximum value of the partial PERT distribution on the left). The upper window bound may be drawn from a PERT distribution given by the maximal intensity value 22 in the image (maximum), the mean outside value outside the object (i.e., the most likely), and the centre value 23 between mean inside 24 and outside 25 intensity values (thus being the minimum of the partial PERT distribution on the right).

The above-discussion is intended to be merely illustrative of the present system and should not be construed as limiting the appended claims to any particular embodiment or group of embodiments. Accordingly, the specification and drawings are to be regarded in an illustrative manner and are not intended to limit the scope of the appended claims. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "an" or "a" does not exclude a plurality. A single processor or other unit may fulfil the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the appended claims.

REFERENCE SIGNS

| | |
|---|---|
| 4 | trained neural network |
| 5 | object |
| 6 | cross-section of a 3D geometric form |
| 7 | 3D region of interest |
| 8 | information corresponding to the 3D geometric form |
| 9 | marked 3D volume |
| 10 | 2D slice |
| 11 | first 2D slice |
| 12 | second 2D slice |
| 21 | minimum value |
| 22 | maximum value |

| 23 | centre value |
| 24 | mean value inside the object |
| 25 | mean value outside the object |
| 101 - 106 | method steps for marking objects |
| 201 - 203 | method steps for training a neural network |

## Claims

1. A computer-implemented method for marking at least one object (5) on a 3D image, in particular medical 3D image data, comprising the following steps:

   (a) providing a 3D image including at least one object (5) to be marked, wherein the 3D image may be represented by a plurality of 2D slices (10);
   (b) displaying at least one 2D slice (10) of the 3D image to a user and positioning a 3D geometric form within the 3D image, wherein a cross-section (6) of the 3D geometric form is displayed on the 2D slice (10);
   (c) providing means to the user to select a position of the 3D geometric form on the 2D slice (10) so that the 3D geometric form at least partially overlaps with the object (5) to be marked and receiving position information of the 3D geometric form as selected by the user;
   (d) automatically defining a 3D region of interest (7) within the 3D image which comprises the 3D geometric form at the selected position and clipping the image data from the 3D region of interest (7) from the 3D image;
   (e) applying a trained algorithm to the image data from the 3D region of interest (7), wherein the output of the trained algorithm is a 3D volume (9) within the 3D region of interest (7) which is predicted to cover the object (5);
   (f) outputting the marked 3D volume (9).

2. The computer-implemented method according to claim 1,
   wherein the 3D geometric form is an ellipsoid, preferably a sphere.

3. The computer-implemented method according to any one of the preceding claims,
   wherein the 3D region of interest (7) is defined such that its centre point corresponds to the centre point of the 3D geometric form.

4. The computer-implemented method according to any one of the preceding claims,
   wherein the 3D region of interest (7) is defined to be larger than the 3D geometric form by a predefined amount.

5. The computer-implemented method according to any one of the preceding claims,
   wherein for determining the 3D volume (9) within the 3D region of interest (7), a 3D Gaussian kernel with its maximum at the centre point of the cross-section (6) is fed into the trained algorithm, in particular into a neural network, together with the image data from the 3D region of interest (7), and wherein the trained algorithm determines the 3D volume (9) also based on the 3D Gaussian kernel.

6. The computer-implemented method according to any one of the preceding claims,
   wherein the 3D region of interest (7) is of cuboid, in particular cubic, form.

7. The computer-implemented method according to any one of the preceding claims,
   wherein the user is provided with the means to change the size of the 3D geometric form.

8. The computer-implemented method according to claim 7,
   wherein for each size of the 3D geometric form a different trained algorithm, in particular a different trained neural network (4), trained for this specific size, is applied.

9. The computer-implemented method according to any one of the preceding claims,
   wherein the trained algorithm is a trained neural network (4), in particular a semantic network, preferably a U-Net based network or an F-Net based network.

10. The computer-implemented method according to any one of the preceding claims,
    wherein the steps (c) to (e) are repeated at least once such that at each repetition an additional 3D volume (9) is generated that depends on additional user input, and

    wherein each additional 3D volume (9) is joined together with the currently existing 3D volume (9) resulting in a larger existing 3D volume (9), wherein, optionally, the currently existing 3D volume (9) is displayed for the user and updated after each repetition.

11. The computer-implemented method according to any one of the preceding claims,

    wherein the user is provided with the opportunity to switch the displayed view to another 2D slice (10) of the 3D image and to select a position in the currently displayed 2D slice (10), and
    wherein the method steps following the user selection are carried out based on the user selection on the slice that is currently displayed.

**12.** An image processing device being configured to carry out the following steps, in particular to carry out steps according to the method of any one of the previous claims:

    (a) receiving a 3D image including at least one object (5) to be marked, wherein the 3D image may be represented by a plurality of 2D slices (10);
    (b) displaying at least one slice of the 3D image to a user;
    (c) providing means to the user to a select position of the 3D geometric form on the 2D slice (10) so that the 3D geometric form at least partially overlaps with the object (5) to be marked;
    (d) in response to the user selection automatically defining a 3D region of interest (7) within the 3D image which comprises the 3D geometric form at the selected position and clipping the image data from the 3D region of interest (7) from the 3D image;
    (e) applying a trained algorithm to the image data from the 3D region of interest (7), wherein the output of the trained algorithm is a 3D volume (9) within the 3D region of interest (7) which is predicted to cover the object (5);
    (f) outputting the 2D slice (10) together with the marked 3D volume (9).

**13.** A method for training a neural network, in particular according to the neural network in one of the claims 1-11, comprising the following steps:

    (a) providing as input training data a set of 3D regions of interest from a 3D image, wherein each 3D region of interest (7) includes at least part of an object (5) on the 3D image;
    (b) providing as output training data a 3D data set having the size of the 3D region of interest (7) and containing information for each voxel whether it is marked as part of the object (5) or not corresponding to the object (5) for each provided 3D region of interest (7);
    (c) training the neural network with the input training data and the output training data.

**14.** A method according to claim 13,

    wherein each provided 3D region of interest (7) is chosen such that the distance between its centre point and a boundary of the object (5) has a specified value,
    wherein the specified value is a fixed value or a fixed value with an added random deviation within a predefined maximum amount of deviation.

**15.** A method according to any one of claims 13 to 15,

wherein an intensity window of the 3D region of interest (7) is randomly determined based on at least one PERT distribution,
wherein the at least one PERT distribution is in particular based on the min/max data values (21, 22) of the corresponding 3D image, the mean data values inside (24) and outside (25) the object (5) and the centre (23) between the mean data values.

FIG. 1

FIG. 2

FIG. 3

201    202    203

FIG. 4

21    24    23    25    22

FIG. 5

Europäisches
Patentamt

European
Patent Office

Office européen
des brevets

# EUROPEAN SEARCH REPORT

**Application Number**

EP 23 17 6139

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 10 235 759 B2 (SCOPIS GMBH [DE]) 19 March 2019 (2019-03-19) <br> * abstract * <br> * column 1, lines 20-31 * <br> * column 2, lines 34-57 * <br> * column 4, line 58 - column 6, line 6 * <br> * column 6, lines 31-57 * <br> * column 7, line 1 - column 10, line 5 * <br> * figures 4-8 * | 1-9, 11-13 | INV. G06T7/11 |
| Y | US 11 610 316 B2 (SIEMENS HEALTHCARE GMBH [DE]) 21 March 2023 (2023-03-21) <br> * abstract * <br> * column 2, lines 13-55 * <br> * column 4, lines 46-65 * <br> * figure 2 * | 1-9, 11-13 | |
| A | EP 3 639 240 B1 (KING S COLLEGE LONDON [GB]) 20 April 2022 (2022-04-20) <br> * abstract * <br> * paragraphs [0004] - [0009] * | 1-15 | |
| A | US 2019/227641 A1 (DOUGLAS KATHLEEN M [US] ET AL) 25 July 2019 (2019-07-25) <br> * the whole document * | 1-15 | **TECHNICAL FIELDS SEARCHED (IPC)** <br><br> G06T |

The present search report has been drawn up for all claims

| Place of search | Date of completion of the search | Examiner |
|---|---|---|
| Munich | 15 November 2023 | Klemencic, Ales |

EPO FORM 1503 03.82 (P04C01)

**ANNEX TO THE EUROPEAN SEARCH REPORT
ON EUROPEAN PATENT APPLICATION NO.**          EP 23 17 6139

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2023

| Patent document cited in search report | | Publication date | Patent family member(s) | | Publication date |
|---|---|---|---|---|---|
| US 10235759 | B2 | 19-03-2019 | EP | 3127085 A1 | 08-02-2017 |
| | | | GB | 2524955 A | 14-10-2015 |
| | | | US | 2017148173 A1 | 25-05-2017 |
| | | | WO | 2015150444 A1 | 08-10-2015 |
| US 11610316 | B2 | 21-03-2023 | NONE | | |
| EP 3639240 | B1 | 20-04-2022 | EP | 3639240 A1 | 22-04-2020 |
| | | | US | 2020167930 A1 | 28-05-2020 |
| | | | WO | 2018229490 A1 | 20-12-2018 |
| US 2019227641 | A1 | 25-07-2019 | US | 11202061 B1 | 14-12-2021 |
| | | | US | 2019227641 A1 | 25-07-2019 |
| | | | US | 2020409480 A1 | 31-12-2020 |
| | | | US | 2021072844 A1 | 11-03-2021 |
| | | | US | 2021124430 A1 | 29-04-2021 |
| | | | US | 2021124431 A1 | 29-04-2021 |
| | | | US | 2021294435 A1 | 23-09-2021 |
| | | | US | 2023341952 A1 | 26-10-2023 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RONNEBERGER et al.** U-Net: Convolutional Networks for Biomedical Image Segmentation. *MICCAI' 15, LNCS*, 2015, vol. 9351, 234-241

- **BROSCH** ; **SAALBACH**. Foveal fully convolutional nets for multi-organ segmentation. *Proc. SPIE*, 2018, 105740U